(19) Europäisches Patentamt
European Patent Office
Office européen des brevets

(11) **EP 2 466 864 B1**

(12) **EUROPÄISCHE PATENTSCHRIFT**

(45) Veröffentlichungstag und Bekanntmachung des Hinweises auf die Patenterteilung:
**27.02.2019   Patentblatt 2019/09**

(51) Int Cl.:
***H04M 9/08*** *(2006.01)*

(21) Anmeldenummer: **10194886.7**

(22) Anmeldetag: **14.12.2010**

(54) **Transparente Dekorrelation der Lautsprechersignale bei mehrkanaligen Echokompensatoren**

Transparent decorrelation of the loudspeaker signals of multi-channel echo compensators

Décorrélation transparente des signaux de haut-parleurs dans des compensateurs d'écho à plusieurs canaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.06.2012   Patentblatt 2012/25**

(73) Patentinhaber: **Deutsche Telekom AG**
**53113 Bonn (DE)**

(72) Erfinder:
 • **Spors, Sascha**
   **10243 Berlin (DE)**
 • **Buchner, Herbert**
   **10785 Berlin (DE)**
 • **Helwani, Karim**
   **10829 Berlin (DE)**

(74) Vertreter: **Vossius & Partner**
**Patentanwälte Rechtsanwälte mbB**
**Siebertstrasse 3**
**81675 München (DE)**

(56) Entgegenhaltungen:
   **EP-A2- 1 612 963**

 • **KARIM HELWANI ET AL: "Source-domain adaptive filtering for MIMO systems with application to acoustic echo cancellation", ACOUSTICS SPEECH AND SIGNAL PROCESSING (ICASSP), 2010 IEEE INTERNATIONAL CONFERENCE ON, IEEE, PISCATAWAY, NJ, USA, 14. März 2010 (2010-03-14), Seiten 321-324, XP031697816, ISBN: 978-1-4244-4295-9**
 • **Karim Helwani, Herbert Buchner and Sascha Spors: "On the Robust and Efficient Computation of the Kalman Gain for Multichannel Adaptive Filtering with Application to Acoustic Echo Cancellation", Signals, Systems and Computers (ASILOMAR), 2010 Conference Record of the Forty Fourth Asilomar Conference , 10. November 2010 (2010-11-10), XP002639142, Gefunden im Internet: URL:http://ieeexplore.ieee.org/stamp/stamp .jsp ?tp=&arnumber=5757548 [gefunden am 2011-05-16]**

**Beschreibung**

Die vorliegende Erfindung betrifft die mehrkanalige akustische Wiedergabe und insbesondere die Echokompensation in der Vollduplexkommunikation, wie sie beispielsweise in Freisprecheinrichtungen angewendet wird.

Vollduplexkommunikation in Freisprecheinrichtungen, wie z.B. in Telekonferenzsystemen benötigt akustische Echokompensation. In einem typischen Aufbau wird ein mehrkanaliges Audiosignal von einem fernen Senderaum in einen lokalen Konferenzraum ('Naher Raum') mittels P Lautsprecherkanälen übertragen (Signale $x_1$, ..., $x_P$) und von einer Anzahl P Lautsprechern im lokalen Konferenzraum ausgegeben. Gleichzeitig werden im nahen Raum von den Lautsprechern und lokalen Sprechern Mikrofonsignale $y_1$, ..., $y_Q$ mittels einer Anzahl Q Mikrofonen aufgenommen.

Um nun bei Vollduplexkommunikation eine Rückkopplung der aus dem fernen Raum kommenden Lautsprechersignale über die Mikrofone zurück zum fernen Senderaum oder beispielsweise zu einem automatischen Spracherkennungssystem usw. zu verhindern, werden durch einen akustischen Echokompensator die P$\times$Q akustischen Signalpfade des nahen Raums mittels eines adaptiven MIMO-Filters (Multiple-Input and Multiple-Output) nachgebildet, und die nachgebildeten Echos werden sodann von den aufgenommenen Mikrofonsignalen $y_1$, ..., $y_Q$ subtrahiert. Üblicherweise wird bei derartigen adaptiven Systemen von Impulsantworten mit endlicher zeitlicher Ausdehnung ausgegangen (FIR, engl. Finite Impulse Response), da bei diesen während der Adaption Stabilität gewährleistet ist.

Bei einer derartigen mehrkanaligen adaptiven Filterung gibt es zwei wesentliche bekannte Probleme: Einerseits die relativ hohe Rechenkomplexität aufgrund der Systemstruktur (es müssen P$\times$Q Signalpfade mittels jeweils mehreren tausend Filterkoeffizienten adaptiv nachgebildet werden), andererseits ist die Adaption bei zueinander korrelierten Eingangssignalen des adaptiven Filters in vielen Anwendungsfällen aus numerischen Gründen problematisch. Bei der akustischen Echokompensation ergeben sich beispielsweise die korrelierten Eingangsignale dadurch, dass die Lautsprechersignale meist von nur wenigen unabhängigen Quellen im fernen Raum stammen. Bei einer Koeffizientenoptimierung durch Minimierung der quadratischen Fehlerleistungen (sog. Least-Squares Problem) weist daher die sich ergebende sog. Normalgleichung eine schlecht konditionierte Korrelationsmatrix auf, so dass zu deren iterativer Lösung im allgemeinen sehr rechenintensive Algorithmen benötigt werden, wie z.B. der Recursive Least-Squares (RLS)-Algorithmus (siehe beispielsweise S. Haykin, Adaptive filter theory, Prentice Hall, 1991).

Um diese Probleme teilweise zu umgehen, wurde der Einsatz von adaptiver Filterung in geeigneten Signaltransformationsbereichen vorgeschlagen. Bisherige, in der Literatur beschriebene adaptive Ansätze in Transformationsbereichen basieren hauptsächlich auf zeitlichen Transformationen auf den individuellen Signalkanälen, beispielsweise im "Frequency-Domain Adaptive Filtering" (FDAF), welches in H. Buchner, J. Benesty und W. Kellermann, "Multichannel frequency-domain adaptive algorithms with application to acoustic echo cancellation," in J. Benesty et al., (Hrsg.), Adaptive signal Processing: Application to real-world problems, Springer-Verlag, Berlin/Heidelberg, 2003 für den Mehrkanalfall zusammenfassend dargestellt wurde. Hierbei wird im Wesentlichen die FIR-Struktur der einzelnen (einkanaligen) Teilsysteme ausgenutzt, so dass mit bekannten, zeitlich konstanten Transformationen, insbesondere der Diskreten Fourier-Transformation (DFT) gearbeitet werden kann. Dies bewirkt sowohl einen Komplexitätsgewinn bei den Filteroperationen der einkanaligen Teilsysteme, als auch eine Verbesserung der numerischen Eigenschaften bei der Adaption.

Durch Erweiterung dieser insbesondere aus dem FDAF bekannten Idee wurden in jüngster Zeit verschiedene erste Adaptionsverfahren mit zeitlichen und räumlichen Transformationen vorgeschlagen. Ziel der räumlichen Transformationen ist es, insbesondere bei vielkanaligen Systemen im Zusammenhang mit Sensor- und Aktor-Arrays (z.B. bei Audiowiedergabe mittels Lautsprecher-Arrays bei der sog. Wellenfeldsynthese, siehe z.B. S. Spors, H. Buchner, R. Rabenstein, W. Herbordt, "Active listening room compensation for massive multichannel sound reproduction systems using wave-domain adaptive filtering," Journal of the Acoustical Society of America, Bd. 122, Nr. 1, S. 354-369) den Einsatz von adaptiven Filteranwendungen (z.B. akustische Echokompensation) zu ermöglichen. Hierbei wird angestrebt, zusätzlich zu den genannten Vorteilen von FDAF auch eine näherungsweise Diagonalisierung, d.h. eine Entkopplung des ursprünglich vollbesetzten adaptiven MIMO-Systems im Transformationsbereich zu erzielen (siehe H. Buchner und S. Spors, "A general derivation of wave-domain adaptive filtering and application to acoustic echo cancellation," in Proc. Asilomar Conference on Signals, Systems, and Computers, Pacific Grove, CA, USA, Okt. 2008).

Die Wahl der räumlichen Transformationen hängt vom vorhandenen Vorwissen über den Lösungsraum des Adaptionsproblems. Ein erster Näherungsansatz ist das sog. "Wave-Domain Adaptive Filtering" (WDAF) (siehe z.B. H. Buchner, S. Spors und W. Kellermann, "Wave-Domain Adaptive Filtering: acoustic echo cancellation for full-duplex systems based on wave-field synthesis," in IEEE Int. Conference on Acoustics, Speech, and Signal Processing, Bd. 4). Hierbei wird von der physikalischen Beschreibung der Wellenausbreitung durch die Wellengleichung als Vorwissen ausgegangen. Durch bestimmte Geometrieannahmen über die Arraykonfiguration und durch Annahme von Freifeldbedingungen werden die entsprechenden räumlichen Freifeld-Eigenfunktionen (z.B. sphärische Harmonische) als feste Signaltransformationen verwendet.

Das sogenannte "Eigenspace Adaptive Filtering" (EAF) ist beispielsweise in S. Spors, H. Buchner und R. Rabenstein, "Eigenspace adaptive filtering for efficient pre-equalization of acoustic MIMO systems," in European Signal Processing Conference (EUSIPCO), 2006 beschrieben und stellt im Vergleich zu WDAF eine etwas formal allgemeinere Beschreibung dar, indem es von der Singulärwertzerlegung (SVD) des gesuchten MIMO-Systems ausgeht, und daraus die entsprechenden Transformationen ableitet. Der Nachteil ist jedoch, dass hierzu das gesuchte System idealerweise bereits bekannt sein müsste, weshalb hiervon in der Praxis ebenfalls nur Näherungslösungen abgeleitet werden können. Es konnte gezeigt werden, dass sich WDAF als Sonderfall in das EAF-Konzept einordnen lässt.

In S. Spors und H. Buchner, "Multichannel transform-domain adaptive filtering: A two-stage approach and illustration for acoustic echo cancellation," in 11th International Workshop on Acoustic Echo and Noise Control (IWAENC), 2008 wurde ein weiterer Transformationsbereichs-Ansatz eingeführt ("Transform-Domain Adaptive Filtering", TDAF), welcher die Forderung nach der Systemzerlegung zunächst aufgibt, und stattdessen durch die mehrkanalige Signaltransformation die Kreuzkorrelationsmatrix der Eingangssignale durch eine unitäre Transformation diagonalisiert, was in einer besseren numerischen Konditionierung für die Adaption resultiert. Die Transformation ist hier explizit gegeben durch die Eigenwertzerlegung der hermitischen Korrelationsmatrix.

Eine Steigerung der Leistungsfähigkeit der adaptiven MIMO-Filterung in Transformationsbereichen durch geeignet bestimmte, aus den gegebenen Signalen dynamisch angepasste Transformationen bietet der in der DE 10351793 A1 vorgeschlagene Ansatz.

Bei Telekonferenzsystemen, die vielkanalige Wiedergabesysteme verwenden, ist die Mischmatrix der Quellsignale bekannt. Die Aufgabe der vorliegenden Erfindung ist ein Verfahren und eine Vorrichtung zur Verbesserung der Konditionierung der zugrundeliegenden Normalgleichung ohne hörbare Manipulation der Lautsprechersignale und unter Aufgabe der Forderung nach der Systemzerlegung, basiernd auf einer (frequenzselektiven) räumlichen Transformation, die aus der Mischmatrix des Wiedergabesystems hergeleitet werden kann. In der Literatur beschriebene Ansätze zur Verbesserung der Konditionierung der Normalgleichung basieren auf psychoakustisch motivierten Manipulationen der Lautsprechersignale (siehe beispielsweise J. Benesty, D. Morgan und M. Sondhi, "A better understanding and an improved solution to the specific problems of stereophonic acoustic echo cancellation," IEEE Transactions on Speech and Audio Processing, Bd. 6, 1998, S. 156-165). Diese Verfahren können jedoch nicht auf beliebige vielkanalige Wiedergabeverfahren generalisiert werden.

Die EP 1612963 A2 betrifft eine mehrkanalige Echokompensation mit Round-Robin-Prioritätssteuerung. Weiterhin wird in Zusammenhang mit der adaptiven Filterung in Mehrkanal-Anwendungen auf die Veröffentlichungen von K. Helwani, H. Buchner, und S. Spors, "Source-domain adaptive filtering for MIMO systems with application to acoustic echo cancellation", in 2010 IEEE International Conference on Acoustics Speech and Signal Processing (ICASSP), Dallas, TX, 2010, S. 321-324, und K.Helwani et al., "On the Robust and Efficient Computation of the Kaiman Gain for Multichannel Adaptive Filtering with application to Acoustic Echo Cancellation", Signals, Systems and Computers (ASILOMAR), 2010, Conference Record of the Fourty Fourth Asilomar Conference, 10. November 2010 hingewiesen.

Die vorliegende Erfindung betrifft ein Verfahren und eine Vorrichtung zur Verbesserung der Konvergenzrate eines mehrkanaligen Echokompensators.

Gemäß der Erfindung wird ein Verfahren zur akustischen Echokompensation in mehreren Ausgangssignalen bei mehrkanaliger Wiedergabe bereitgestellt. Die zur Wiedergabe verwendeten Eingangssignale werden dabei durch Abbilden mehrerer Quellsignale mittels einer vorbestimmten Mischmatrix erzeugt und beispielsweise durch Invertieren der Mischmatrix dekorreliert. Ein in den Ausgangssignalen durch die Eingangssignale hervorgerufenes Echo wird durch adaptive Filterung nachgebildet und aus den Ausgangssignalen entfernt. Durch die Erfindung wird ferner eine Vorrichtung zur akustischen Echokompensation in mehreren Ausgangssignalen bei mehrkanaliger Wiedergabe und eine Vorrichtung zur mehrkanaligen Wiedergabe bereitgestellt.

Die Erfindung basiert auf folgenden Grundgedanken: Alle Verfahren der mehrkanaligen akustischen Wiedergabesysteme verwenden eine vordefinierte Mischmatrix C, die die Quellensignale auf bestimmte Lautsprechersignale abbildet, um einen gewünschten Höreindruck hervorzurufen. Die Lautsprechersignale sind in den meisten Fällen hochgradig korreliert. Da die Mischmatrix des Wiedergabesystems bekannt ist können die Lautsprechersignale dekorelliert werden. Dies kann entweder durch die ideale Lösung des Separationsproblems erzielt werden (siehe hierzu H. Buchner, R. Aichner, und W. Kellermann, "TRINICON-based Blind System Identification with Application to Multiple-Source Localization and Separation" in: Blind Speech Separation, S. Makino, H. Sawada, und T. Lee (Hrsg.), Springer Netherlands, 2007, S. 101-147) oder durch eine Inversion der Mischmatrix.

Unter der Annahme, dass die wiedergegebenen Quellsignale statistisch unabhängig sind, was in vielen realen Szenarien zutrifft (z.B. verschiedene Sprecher), hat die Korrelationsmatrix der Quellsignale eine niedrige Konditionszahl und lässt sich numerisch stabil invertieren (vgl. hierzu beispielsweise G.W. Stewart, Matrix algorithms, Philadelphia: Society for Industrial and Applied Mathematics, vol. 1, 2001, S. 134-135).

Die Auswirkung dieser Dekorrelation auf das Adaptionsproblem ist eine Einschränkung der Identifikation auf den mathematischen Unterraum der gesendeten Quellsignale im fernen Ende. Aus diesem Grund muss eine Positionsänderung im fernen Ende mit einem Wechsel des Unterraum der Identifikation verbunden werden.

Die Bewegung der Quelle im fernen Raum äußert sich auf das Systemidentifikationsproblem als Zeitvarianz des zu identifizierenden Systems. Dadurch, dass die Mischmatrix jederzeit bekannt ist, kann diese Zeitvarianz kompensiert werden, wenn die Inverse der Mischmatrix zur Dekorrelation der Lautsprechersignale verwendet wird. Dagegen erlaubt die ideale Separationslösung keine Kompensation der Zeitvarianz des Systems. Deswegen wird eine Inversion der Mischmatrix bevorzugt.

Die Normal gleichung im Signalraum lautet:

$$H_{est} := (C^{-1} \cdot R_{xx} \cdot (C^{-1})^H)^{-1} \cdot C^{-1} \cdot R_{xy} = C^H \cdot H_{est}$$

Hest ist das geschätzte System nach Wiener-Hopf, dargestellt durch eine Matrix der Dimension PLxQ ist (FIR-Filterlänge L, Zahl der Eingangskanäle P, Zahl der Ausgangskanäle Q), und $R_{xx}(m)$ und $R_{xy}(m)$ die Korrelationsmatrizen aller Eingangs-, bzw. Eingangs- und Ausgangszielsignale im Zeitbereich sind. Diese Korrelationsmatrizen weisen eine Blockstruktur auf, wobei die Einzelblöcke jeweils die Auto- oder Kreuzkorrelationen für L zeitliche Verschiebungen der Signale enthalten. Die unterschiedlichen Blöcke der Matrizen ergeben sich durch die unterschiedlichen Kanalkombinationen (d.h., $P^2$ Blöcke in $R_{xx}(m)$ und $P \times Q$ Blöcke in $R_{xy}(m)$). $C^{-1}$ ist die Inverse der Wiedergabemischmatrix, die Operation $(.)^H$ ist eine Hermitsche Transponierung.

Eine Änderung der virtuellen Position der Quelle bringt eine Änderung der Wiedergabemischmatrix mit sich. Sei C(m) die Mischmatrix zum Zeitpunkt (m) und C(m+1) nach einer Positionänderung zum Zeitpunkt (m+1), um die Identifikation im relevanten Unterraum durchzuführen ist ein Untertraumupdate durchzuführen:

$$H_{est}(m+1) = C^H(m+1) \cdot (C^H(m))^{-1} \cdot H_{est}(m) + G(m)$$

wobei G(m) ein additiver Updatefaktor ist, der vom Identifikationsalgorithmus abhängt.

Die Erfindung wird nachstehend anhand einer bevorzugten Ausführungsform und einer Zeichnung näher erläutert, wobei die einzige Figur eine bevorzugte Ausführungsform des erfindungsgemäßen Systems für die Anwendung bei einer mehrkanaligen akustischen Echokompensation zeigt.

In dem in der Figur dargestellten System kann eine bevorzugte Ausführungsform des erfindungsgemäßen Verfahrens angewendet werden. Diese Ausführungsform umfasst pro Iteration aus folgenden Verarbeitungsschritten:

1. Inversion der Wiedergabemischmatrix:

Die Wiedergabematrix ist ein MIMO-System mit Q Eingängen für Q Quellsignale und P Ausgängen für P Lautsprecher und jeder einzelner Pfad dieses MIMO-System ist ein FIR-Filter der Länge M.
Die Inversion kann entweder im Zeit- oder Frequenzbereich auf analytischer oder numerischer Weise erzielt werden.

a. Für die Inversion im Zeitbereich ist, im Allgemeinen, die Aufstellung der Sylvestermatrix (=Faltungsmatrix) des mehrkanaligen Wiedergabesystems notwendig. Dabei muss darauf geachtet werden, dass die Bedingungen der Inversion laut dem multiple-input/output inverse (MINT) Theorem (siehe beispielsweise M. Miyoshi und Y. Kaneda, "Inverse filtering of room acoustics," Acoustics, Speech and Signal Processing, IEEE Transactions on, vol. 36, Feb. 1988, S. 145-152) erfüllt sind, diese sind:

i. Die FIR-Filter der einzelnen Pfade dürfen keine gemeinsamen Nullstellen im z-Bereich aufweisen.
ii. Die Anzahl der Quellen muss genau kleiner als die Anzahl der Lautsprecher Q<P. (Der Fall ist P<Q ist hier ohnehin unproblematisch, weil dann die Korrelationsmatrix in der Regel gut konditioniert ist.)
iii. Filterlänge LC der FIR-Filter der Entmischmatrix muss so gewählt werden, dass LC=(Q/(P-Q))(M - 1) eine natürliche Zahl ist.

b. Ein Spezialfall für die Inversion ist, wenn das verwendete Wiedergabesystem ein auf der Technik der Wellenfeldsynthese basierendes System ist und nur eine Quelle im fernen Raum aktiv ist. Hierbei ist die Inversion eine zeitliche Umkehrung der einzelnen FIR-Filter.

c. Die Inversion kann auch im Frequenzbereich vorgenommen werden. Dies ist vor allem in den Fällen bevorzugt, in denen sich das Wiedergabesystem als singulär herausstellt. Dabei wird die Moore-Penrose Pseudoinverse verwendet.

2. Zeitliche Transformation der Eingangssignale $x_1$, $x_2$, ...$x_P$.
3. Wenn die Inversion der Mischmatrix im Zeitbereich durchgeführt wurde, ist eine zeitliche Transformation für die Dekorrelationsmatrix notwendig.

4. Räumliche Filterung der Lautsprechersignale mit der Dekorrelationsmatrix.

5. Die Adaption im Signalraum geschieht vorzugsweise mittels MC-FDAF-Algorithmus.

6. Bei jeder Positionsänderung der Position der Quelle muss die Dekorrelationsmatrix neu berechnet werden und die geschätzten Filterkoeffizienten in den neuen Signalraum transformiert werden.

## Patentansprüche

1. Verfahren zur akustischen Echokompensation in mehreren Ausgangssignalen ($y_1$, ..., $y_Q$) bei mehrkanaliger Wiedergabe, wobei
die zur Wiedergabe durch mehrere Lautsprecher in einem nahen Raum verwendeten Eingangssignale ($x_1$, ..., $x_p$) durch Abbilden mehrerer Quellsignale mittels einer vorbestimmten Mischmatrix erzeugt werden;
die mehreren Ausgangssignale ($y_1$, ..., $y_Q$) im nahen Raum durch mehrere Mikrofone aufgenommen werden, wobei die Ausgangssignale ($y_1$, ..., $y_Q$) Signale aufweisen, die durch die Lautsprecher und lokale Sprecher hervorgerufen werden, und
ein durch die Eingangssignale ($x_1$, ..., $x_p$) hervorgerufenes Echo aus den Ausgangssignalen entfernt wird, wobei die akustischen Signalpfade zwischen den Lautsprechern und den Mikrofonen mittels eines adaptiven Filters nachgebildet werden und das so nachgebildete Echo von den Ausgangssignalen ($y_1$, ..., $y_Q$) abgezogen wird, **dadurch gekennzeichnet, dass**
die Eingangssignale ($x_1$, ..., $x_p$) dekorreliert werden, wobei zum Dekorrelieren der Eingangssignale ($x_1$, ..., $x_p$) die Mischmatrix im Zeitbereich invertiert wird, durch die Inversion der Mischmatrix eine Dekorrelationsmatrix (C) erstellt und die Dekorrelationsmatrix (C) zeitlich transformiert wird,
wobei die mit der Dekorrelationsmatrix (C) dekorrelierten Eingangssignale zum Nachbilden des Echos verwendet werden.

2. Verfahren nach Anspruch 1, wobei für die Inversion eine Faltungsmatrix des mehrkanaligen Wiedergabesystems aufgestellt wird.

3. Verfahren nach Anspruch 1 oder 2, wobei die Inversion auf analytische und/oder numerische Weise erfolgt.

4. Verfahren nach einem der vorstehenden Ansprüche, wobei die Einganssignale ($x_1$, ..., $x_p$) vor der adaptiven Filterung zeitlich transformiert werden.

5. Verfahren nach einem der vorstehenden Ansprüche, wobei bei einer Positionsänderung der die Quellsignale erzeugenden Quelle die Einganssignale ($x_1$, ..., $x_p$) neu dekorreliert werden und die Filterkoeffizienten für die adaptive Filterung in den neuen Signalraum transformiert werden.

6. Vorrichtung zur mehrkanaligen Wiedergabe, mit P Mikrofonen und Q Lautsprechern in einem fernen Raum, Q Mikrofonen und P Lautsprechern in einem nahen Raum und einer Vorrichtung zur akustischen Echokompensation in mehreren durch die Q Mikrofone aufgenommenen Ausgangssignalen ($y_1$, ..., $y_Q$) bei mehrkanaliger Wiedergabe durch die P Lautsprecher durch das Verfahren nach einem der vorstehenden Ansprüche, mit einer Einrichtung zum zeitlichen Transformieren der Eingangssignale ($x_1$, ..., $x_p$), einer Einrichtung zum Dekorrelieren der zeitlich transformierten Einganssignale und einem adaptiven Filter.

## Claims

1. A method for acoustic echo compensation in a plurality of output signals ($y_1$, ..., $y_Q$) in multi-channel reproduction, wherein
the input signals ($x_1$, ..., $x_p$) used for reproduction by a plurality of loudspeakers in a near room are generated by mapping a plurality of source signals by means of a predetermined mixing matrix;
the plurality of output signals ($y_1$, ..., $y_Q$) in the near room are recorded by a plurality of microphones, the output signals ($y_1$, ..., $y_Q$) having signals which are caused by the loudspeakers and local speakers, and
an echo caused by the input signals ($x_1$, ..., $x_p$) is removed from the output signals, wherein the acoustic signal paths between the loudspeakers and the microphones are reproduced by means of an adaptive filter, and the echo thus reproduced is subtracted from the output signals ($y_1$, ..., $y_Q$),
**characterized in that**

the input signals ($x_1$, ..., $x_p$) are decorrelated,
wherein the mixing matrix is inverted in the time domain for decorrelating the input signals ($x_1$, ..., $x_p$), a decorrelation matrix (C) is prepared by the inversion of the mixing matrix, and the decorrelation matrix (C) is temporally transformed, wherein the input signals decorrelated by the decorrelation matrix (C) are used to reproduce the echo.

2. Method according to claim 1, wherein a convolution matrix of the multichannel reproduction system is set up for the inversion.

3. Method according to claim 1 or 2, wherein the inversion is effected analytically and/or numerically.

4. Method according to any one of the preceding claims, wherein the input signals ($x_1$, ..., $x_p$) are temporally transformed before the adaptive filtering.

5. Method according to any one of the preceding claims, wherein, in the event of a change in position of the source generating the source signals, the input signals ($x_1$, ..., $x_p$) are newly decorrelated and the filter coefficients for the adaptive filtering are transformed into the new signal room.

6. Device for multi-channel reproduction, comprising P microphones and Q loudspeakers in a remote room, Q microphones and P loudspeakers in a near room, and a device for acoustic echo compensation in a plurality of output signals ($y_1$, ..., $y_Q$) recorded by the Q microphones in multi-channel reproduction by the P loudspeakers, by the method according to any one of the preceding claims, with a means for temporal transformation of the input signals ($x_1$, ..., $x_p$), a means for decorrelating the temporally transformed input signals, and an adaptive filter.

## Revendications

1. Procédé de compensation acoustique d'écho dans plusieurs signaux de sortie ($y_1$, ..., $Y_Q$) lors d'une reproduction à plusieurs canaux, où
les signaux d'entrée ($x_1$, ... , $x_p$) utilisés pour la reproduction par plusieurs haut-parleurs dans un local proche sont générés par application de plusieurs signaux source au moyen d'une matrice de mélange prédéterminée ;
les plusieurs signaux de sortie ($y_1$, ..., $y_Q$) dans le local proche sont enregistrés par plusieurs microphones, lesdits signaux de sortie ($y_1$, ..., $y_Q$) comportant des signaux suscités par les haut-parleurs et les enceintes locales, et un écho suscité par les signaux d'entrée ($x_1$, ..., $x_p$) est supprimé des signaux de sortie, les trajets de signaux acoustiques entre les haut-parleurs et les microphones étant reproduits au moyen d'un filtre adaptatif et l'écho ainsi reproduit étant soustrait des signaux de sortie ($y_1$, .,... , $y_Q$),
**caractérisé en ce que**
les signaux d'entrée ($x_1$, ... , $x_p$) sont décorrélés, la matrice de mélange étant inversée dans la plage temporelle pour la décorrélation des signaux d'entrée ($x_1$, ... , $x_p$), une matrice de décorrélation (C) étant créée par l'inversion de la matrice de mélange et ladite matrice de décorrélation (C) étant transformée temporellement,
les signaux d'entrée décorrélés avec la matrice de décorrélation (C) étant utilisés pour la reproduction de l'écho.

2. Procédé selon la revendication 1, où une matrice de convolution du système de reproduction à plusieurs canaux est créée pour l'inversion.

3. Procédé selon la revendication 1 ou la revendication 2, où l'inversion est effectuée de manière analytique et/ou numérique.

4. Procédé selon l'une des revendications précédentes, où les signaux d'entrée ($x_1$, ... , $x_p$) sont transformés temporellement avant le filtrage adaptatif.

5. Procédé selon l'une des revendications précédentes, où, en cas de changement de position de la source générant les signaux source, les signaux d'entrée ($x_1$, ... , $x_p$) sont décorrélés à nouveau et les coefficients de filtre pour le filtrage adaptatif sont transformés vers le nouvel espace de signal.

6. Dispositif pour la reproduction à plusieurs canaux, avec microphones P et haut-parleurs Q dans un local distant, microphones Q et haut-parleurs P dans un local proche et un dispositif pour la compensation acoustique d'écho dans plusieurs signaux de sortie ($y_1$, ... , $y_Q$) enregistrés par les microphones Q lors d'une reproduction à plusieurs canaux par les haut-parleurs au moyen du procédé selon l'une des revendications précédentes, avec un dispositif pour la transformation temporelle des signaux d'entrée ($x_1$, ... , $x_p$), un dispositif pour la décorrélation des signaux d'entrée transformés temporellement et un filtre adaptatif.

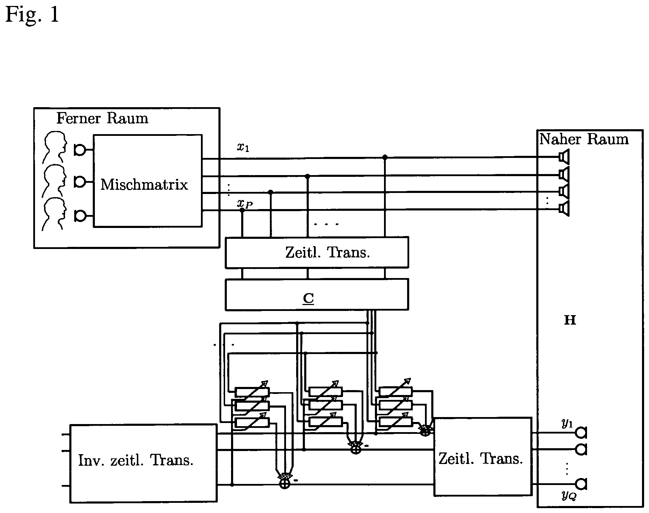

Fig. 1

EP 2 466 864 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10351793 A1
- EP 1612963 A2

**In der Beschreibung aufgeführte Nicht-Patentliteratur**

- **S. HAYKIN.** Adaptive filter theory. Prentice Hall, 1991
- Multichannel frequency-domain adaptive algorithms with application to acoustic echo cancellation. **H. BUCHNER ; J. BENESTY ; W. KELLERMANN et al.** Adaptive signal Processing: Application to real-world problems. Springer-Verlag, 2003
- **S. SPORS ; H. BUCHNER ; R. RABENSTEIN ; W. HERBORDT.** Active listening room compensation for massive multichannel sound reproduction systems using wave-domain adaptive filtering. *Journal of the Acoustical Socicty of America,* vol. 122 (1), 354-369
- **H. BUCHNER ; S. SPORS.** A general derivation of wave-domain adaptive filtering and application to acoustic echo cancellation. *Proc. Asilomar Conference on Signals, Systems, and Computers,* Oktober 2008
- **H. BUCHNER ; S. SPORS ; W. KELLERMANN.** Wave-Domain Adaptive Filtering: acoustic echo cancellation for full-duplex systems based on wave-field synthesis. *IEEE Int. Conference on Acoustics, Speech, and Signal Processing,* vol. 4
- **S. SPORS ; H. BUCHNER ; R. RABENSTEIN.** Eigenspace adaptive filtering for efficient pre-equalization of acoustic MIMO systems. *European Signal Processing Conference (EUSIPCO),* 2006
- **S. SPORS ; H. BUCHNER.** Multichannel transform-domain adaptive filtering: A two-stage approach and illustration for acoustic echo cancellation. *11th International Workshop on Acoustic Echo and Noise Control (IWAENC),* 2008

- **J. BENESTY ; D. MORGAN ; M. SONDHI.** A better understanding and an improved solution to the specific problems of stereophonic acoustic echo cancellation. *IEEE Transactions on Speech and Audio Processing,* 1998, vol. 6, 156-165
- **K. HELWANI ; H. BUCHNER ; S. SPORS.** Source-domain adaptive filtering for MIMO systems with application to acoustic echo cancellation. *2010 IEEE International Conference on Acoustics Speech and Signal Processing (ICASSP),* 321-324
- **K.HELWANI et al.** On the Robust and Efficient Computation of the Kaiman Gain for Multichannel Adaptive Filtering with application to Acoustic Echo Cancellation. *Signals, Systems and Computers (ASILOMAR), 2010, Conference Record of the Fourty Fourth Asilomar Conference,* 10. November 2010
- TRINICON-based Blind System Identification with Application to Multiple-Source Localization and Separation. **H. BUCHNER ; R. AICHNER ; W. KELLERMANN.** Blind Speech Separation. Springer Netherlands, 2007, 101-147
- **G.W. STEWART.** Matrix algorithms. Society for Industrial and Applied Mathematics, 2001, vol. 1, 134-135
- **M. MIYOSHI ; Y. KANEDA.** Inverse filtering of room acoustics. *Acoustics, Speech and Signal Processing, IEEE Transactions on,* 1988, vol. 36, 145-152